Europäisches Patentamt

European Patent Office

Office européen des brevets

(19)

(11) Veröffentlichungsnummer: **0 254 911 B1**

(12)

# EUROPÄISCHE PATENTSCHRIFT

(45) Veröffentlichungstag der Patentschrift: **03.06.92**

(21) Anmeldenummer: **87109676.4**

(22) Anmeldetag: **06.07.87**

(51) Int. Cl.⁵: **H02M 5/27**, H02M 7/19,
H02M 7/515

(54) Stromrichterschaltung und Verfahren zu dessen Steuerung.

(30) Priorität: **01.08.86 CH 3102/86**

(43) Veröffentlichungstag der Anmeldung:
**03.02.88 Patentblatt  88/05**

(45) Bekanntmachung des Hinweises auf die
Patenterteilung:
**03.06.92 Patentblatt  92/23**

(84) Benannte Vertragsstaaten:
**AT CH DE LI SE**

(56) Entgegenhaltungen:
**US-A- 4 159 513**

(73) Patentinhaber: **BBC Brown Boveri Aktiengesellschaft**

**CH-5401 Baden(CH)**

(72) Erfinder: **Gotaas, Birger**
**Stubben 16**
**N-2020 Skedsmokorset(NO)**
Erfinder: **Knaffl, Berislav**
**Lindenhof 25**
**CH-5430 Wettingen(CH)**
Erfinder: **Knapp, Peter**
**Mooslandweg 6**
**CH-5422 Oberehrendingen(CH)**
Erfinder: **Rufer, Alfred-Christophe**
**Steinbruchstrasse 34**
**CH-5300 Lauffohr(CH)**
Erfinder: **Zürcher, Urs**
**Allmendstrasse 32**
**CH-5300 Turgi(CH)**

## Beschreibung

TECHNISCHES GEBIET

Bei der Erfindung wird ausgegangen von einem Verfahren zum steuern einer Stromrichterschaltung und von einer Stromrichterschaltung zur Ausführung des Verfahrens nach dem Oberbegriff der Patentansprüche 1 und 4. Die Erfindung betrifft auch Verwendungen der Stromrichterschaltung.

STAND DER TECHNIK

Mit den Oberbegriffen nimmt die Erfindung auf einen Stand der Technik Bezug, wie er aus der US-A-4,159,513 bekannt ist. Dort wird zur Verbesserung des Reversierbetriebes eines Motors mittels eines speziell ausgebildeten Transformators und mehrerer Stromrichter eine Gleichspannung in eine sinusförmige Wechselspannung umgewandelt. Dazu wird mit Hilfe der einzelnen Stromrichter die Gleichspannung auf die Teiltransformatoren geschaltet und auf der Primärseite der in Reihe geschalteten Wicklungen zu einer sinusförmigen, treppenförmigen Wechselspannung aufsummiert. Die Teiltransformatoren weisen eigene magnetische Kerne auf.

Schutzmassnahmen beim Ausfall eines Stromrichters sind nicht vorgesehen.

Aus der Schweizer Firmenzeitschrift "Brown Boveri Mitteilungen" 12 (1979), S. 763 - 777 ist es bekannt, Umrichterlokomotiven mit Drehstrom-Asynchronmotoren aus einem 16 2/3-Hz-Bahnnetz über einen Gleichspannungszwischenkreis zu speisen. Die Gleichspannung wird dabei aus dem Bahnnetz mittels eines Stromsummiertransformators, der mehrere Teilwicklungen mit gemeinsamem Transformatorkern aufweist, und mittels mehrerer an diese Teilwicklungen angeschlossener Vierquadrantensteller gewonnen. Die Vierquadrantensteller werden im Unterschwingungsverfahren betrieben und benötigen auf der Wechselstromseite eine relativ grosse Induktivität, welche mit Hilfe einer hohen Kurzschlussspannung des Transformators von ca. 30 % realisiert wird. Derartige Transformatoren sind teuer und weisen hohe Energieverluste in den Kupferteilen auf.

In der deutschen Zeitschrift "Elektrische Bahnen" 6 (1974) S. 135 - 142 sind Schaltung und Betrieb eines Vierquadrantenstellers beschrieben. Diese Schaltung erlaubt es, ein Wechselstromnetz mit einem Gleichspannungszwischenkreis (Zwischenkreis mit eingeprägter Spannung) zu verbinden. Zwei Vierquadrantensteller, die über je eine Transformatorsekundärwicklung netzseitig parallelgeschaltet sind, arbeiten auf einen gemeinsamen Zwischenkreis. Die Steuerung erfolgt durch phasenversetztes Takten der beiden Vierquadrantensteller mit einer Frequenz von ca. 11 • 16 2/3 Hz. Durch diese relativ hohe Taktfrequenz entstehen hohe Energieverluste in Beschaltungsbauelementen der Vierquadrantensteller.

Darstellung der Erfindung

Der Erfindung, wie sie in den Ausprüchen 1-4 definiert ist, löst die Aufgabe, eine Stromrichterschaltung der eingangs genannten Art und ein Verfahren zu deren Betrieb anzugeben, die mit weniger Energieverlusten auskommen und einen besseren Schutz gewährleisten.

Zur Erzeugung einer wenigstens annähernd sinusförmigen Wechselspannung mit einer vorgebbaren Frequenz wird die Amplitude dieser Wechselspannung durch stufenweise Addition und/oder Subtraktion von Teilspannungen gleicher Amplitude gebildet. Beginn und Ende jeder Spannungsstufe sind zeitlich so gestaffelt, dass die durch die Spannungsstufen erzeugte Treppenform der Sinusform angepasst ist. Jede Teilspannung wird durch eine besondere Teilspannungsquelle erzeugt. Die Teilspannungsquellen werden in derselben Reihenfolge abgeschaltet, wie sie zur Bildung der Treppenform eingeschaltet wurden.

Ein Vorteil der Erfindung besteht darin, dass viel kleinere Beschaltungsverluste des Stromrichters resultieren. Dadurch ergibt sich ein besserer Wirkungsgrad der Stromrichter. Beschaltung und Kühlung des Stromrichters können einfacher und billiger realisiert werden. Ein weiterer Vorteil besteht darin, dass keine erhöhte Induktivität am Wechselstromausgang des Stromrichters benötigt wird. Der Spannungssummiertransformator kann mit einer bei den Stromrichtertransformatoren üblichen Kurzschlussspannung in der Grössenordnung von 5 % - 13 % gebaut werden. Die Reduktion der Kurzschlusspannung erlaubt bei gleichen Dimensionierungskriterien eine billigere Ausführung und vor allem niedrigere Kupferverluste des Transformators.

Gemäss einer vorteilhaften Ausgestaltung der Erfindung ergeben sich ausserdem etwas geringere Verluste der Thyristoren und Dioden des Vierquadrantenstellers. Die Reduktion der Verluste wird am Beispiel eines 700-kVA-Stellers gezeigt, welcher für Stromentnahme aus dem 16 2/3-Hz-Bahnnetz in einem Lokomotivtyp projektiert wurde und mit einer Frequenz von 11 • 16 2/3 Hz getaktet wird. Bei Volllast betragen die Halbleiterverluste ca. 3,2 kW und die Beschaltungsverluste ca. 10 kW. Wenn der gleiche Steller nur einmal in der 16 2/3-Hz-Halbperiode ein-und ausschaltet, sind die Beschaltungsverluste ca. 11 mal kleiner, d.h. sie betragen nur ca. 0,9 kW.

Kurze Beschreibung der Zeichnungen

Nachfolgend wird die Erfindung anhand von in Zeichnungen dargestellten Ausführungsformen näher erläutert. Es zeigen:

Fig. 1

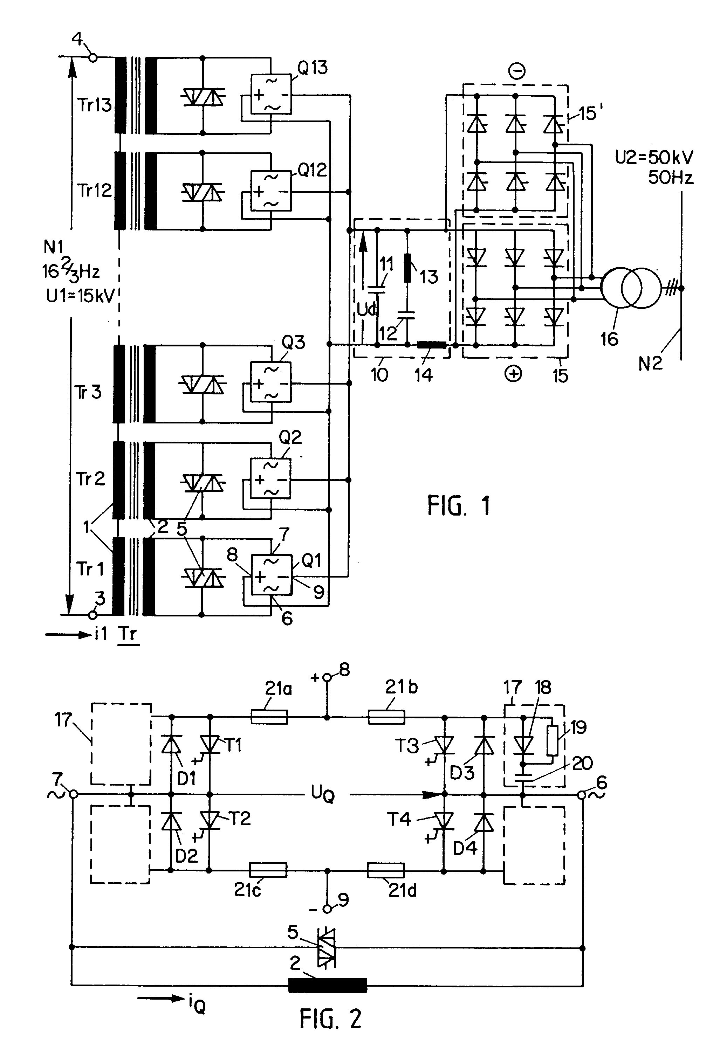

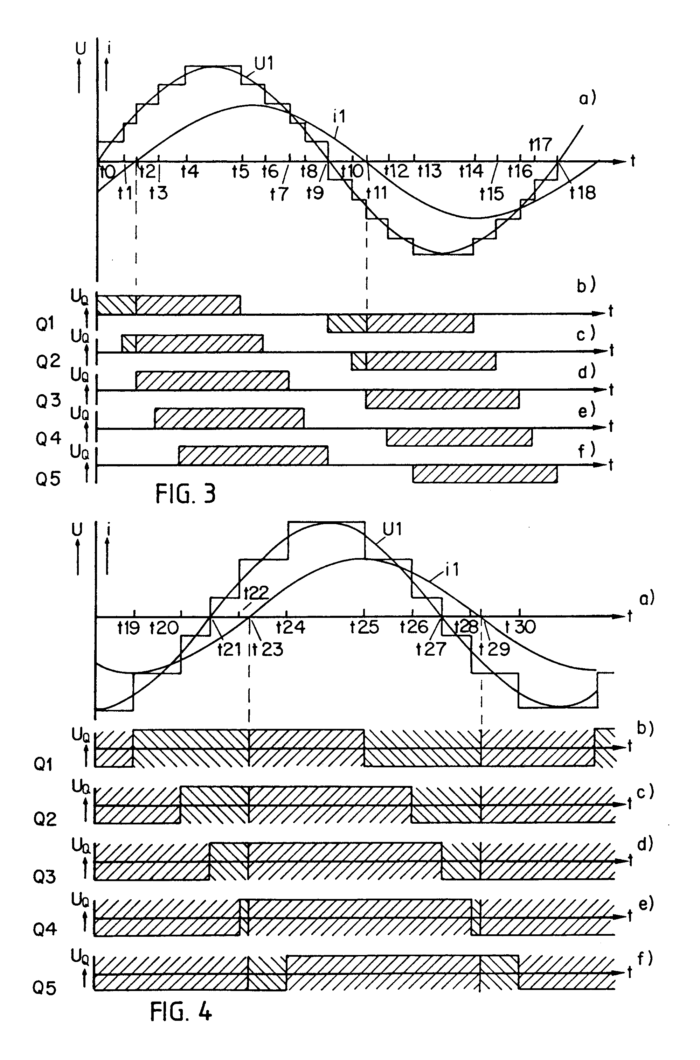

ein Prinzipschaltbild eines vollstatischen Frequenzumrichters mit einer Stromrichterschaltung mit Spannungssummiertransformator und mehreren daran angeschlossenen Vierquadrantenstellern sowie Thyristor-Kurzschliessern,

Fig. 2

ein Prinzipschema eines Vierquadrantenstellers mit Thyristor-Kurzschliesser und stellerseitiger Wicklung des Spannungssummiertransformators gemäss Fig. 1,

Fig. 3a und 4a

den Zeitverlauf von Wechselstrom und Wechselspannung bei Stromrichterschaltungen gemäss den Fig. 1 und 2 mit unterschiedlicher Spannungsstufenzahl,

Fig. 3b - 3f und Fig. 4b - 4f

den Zeitverlauf von Schaltzuständen der fünf Stromrichterschaltungen, entsprechend dem Wechselstrom und der Wechselspannung der Fig. 3a bzw. 4a.

## Wege zur Ausführung der Erfindung

In Fig. 1 ist mit N1 ein einphasiges 16 2/3-Hz-Bahnnetz mit einer Wechselspannung U1 = 15 kV und mit N2 ein dreiphasiges 50-Hz-Landesnetz mit einer Wechselspannung U2 = 50 kV angedeutet. Ein Spannungssummiertransformator Tr besteht aus 13 gleich aufgebauten und dimensionierten Teiltransformatoren Tr1, Tr2 ... Tr13, die jeweils eigene, nicht miteinander magnetisch verkoppelte Transformatorkerne haben. Jeder Teiltransformator Tr1 ... Tr13 besitzt eine netzseitige Wicklung 1 und eine stromrichterseitige Wicklung 2. Die netzseitigen Wicklungen 1 der Teiltransformatoren Tr1 - Tr13 sind in Reihe geschaltet und endseitig mittels Klemmen 3 und 4 an das Bahnnetz N1 angeschlossen. Mit i1 ist der Wechselstrom durch die netzseitigen Wicklungen 1 bezeichnet. Jede stromrichterseitige Wicklung 2 eines Teiltransformators Tr1 ... Tr13 ist über Wechselspannungsanschlüsse 6 und 7 an einen Vierquadrantensteller Q1 bzw. Q2 ... Q13 und zusätzlich an einen Thyristor-Kurzschliesser bzw. Wechselstromschalter 5 mit antiparallelen Thyristoren angeschlossen. Mit 8 sind "+"-Pole und mit 9 "-"-Pole der Vierquadrantensteller Q1 ... Q13 bezeichnet. Ein Gleichspannungszwischenkreis 10 weist zwischen seinem "+"- und "-"-Zweig einen Gleichspannungsstützkondensator 11 und ferner einen Saugkreis mit einer Reihenschaltung aus einem Saugkreiskondensator 12 und einer Saugkreisdrossel 13 auf. Die Eigenfrequenz des Saugkreises ist auf die doppelte Frequenz des Bahnnetzes, d.h. auf 33 1/3 Hz abgestimmt, damit bei der Speisung des Bahnnetzes N1 entstehende Leistungspulsationen nur in einem tolerablen Ausmass auf das dreiphasige 50-Hz-Landesnetz N2 übertragen werden. Im "+"-Zweig des Gleichspannungszwischenkreises 10 ist eine Glättungsdrossel 14 vorgesehen, die einerseits mit jedem "+"-Pol 8 der Vierquadrantensteller Q1 ... Q13 und andererseits mit dem "-"-Zweig eines Stromrichters 15 und mit dem "+"-Zweig eines Stromrichters 15' verbunden ist. Der "-"-Zweig des Gleichspannungszwischenkreises 10 ist einerseits mit allen "-"-Polen 9 der Vierquadrantensteller Q1 ... Q13 und andererseits mit dem "+"-Zweig des Stromrichters 15 und mit dem "-"-Zweig des Stromrichters 15' verbunden. Die Stromrichter 15 und 15' sind zueinander antiparallel geschaltete, netzkommutierte Brückengleichrichter mit Thyristoren in den Brückenzweigen. Die Wechselstromanschlüsse dieser Stromrichter 15 und 15' sind über einen Stromrichtertransformator 16 mit dem Wechselspannungsnetz N2 verbunden.

Der Aufbau eines der gleich aufgebauten, einphasigen Vierquadrantensteller Q1 ... Q13 ist in Fig. 2 zu erkennen. Gleiche Teile sind mit gleichen Bezugszeichen versehen.

Der Vierquadrantensteller weist vier Brückenzweige mit je einem abschaltbaren GTO-Thyristor T1 ... T4 je Brückenzweig auf. Einerseits sind die Thyristoren T1 und T2 und andererseits die Thyristoren T3 und T4 in Reihe geschaltet, wobei die Anoden der Thyristoren T1 und T3 mit dem "+"-Pol 8 über Sicherungen 21a bzw. 21b und die Kathoden der Thyristoren T2 und T4 mit dem "-"-Pol 9 über Sicherungen 21c bzw. 21d verbunden sind. Antiparallel zu jedem der Thyristoren T1 ... T4 ist eine Diode D1 ... D4 geschaltet. Ferner weist jeder Thyristor T1 ... T4 eine gleich aufgebaute Thyristorbeschaltung bzw. einen Abschaltentlastungskreis 17 auf. Der Abschaltentlastungskreis 17 weist eine Beschaltungsdiode 18 in Reihe mit einem Beschaltungskondensator 20 auf, wobei die Beschaltungsdiode 18 und der Thyristor, z.B. T3, gleich gepolt sind. Parallel zur Beschaltungsdiode ist ein Beschaltungswiderstand 19 angeschlossen. Die Verbindungspunkte der Thyristoren T1 und T2 sind mit dem Wechselspannungsanschluss 6 und die Verbindungspunkte der Thyristoren T3 und T4 mit dem Wechselspannungsanschluss 7 verbunden. $U_Q$ bezeichnet die Wechselspannung und $i_Q$ den Wechselstrom des Vierquadrantenstellers.

Der in Verbindung mit Fig. 1 beschriebene Frequenzumrichter ist für eine Energieübertragung aus einem dreiphasigen Landesnetz N2 in ein einphasiges Bahnnetz N1 und umgekehrt geeignet und für eine Leistung von z.B. 10 MW ausgelegt. Falls Energie nur aus dem Landesnetz N2 in das Bahnnetz N1 übertragen werden soll, kann der Stromrichter 15' entfallen.

Im Normalbetrieb sind nur 12 Vierquadrantensteller Q1 ... Q12 an der Bildung der 16 2/3-Hz-Wechselspannung beteiligt. Der 13. Vierquadrantensteller Q13 ist als Momentanreserve vorgesehen, wobei dessen Thyristoren gesperrt bleiben und der Wechselstromschalter 5 ständig eingeschaltet bzw. einer der beiden Thyristoren des Wechselstromschalters 5 ständig leitend ist. Die Bildung der 16 2/3-Hz-Wechselspannung U1 entsteht durch Summierung der in den einzelnen netzseitigen Wicklungen 1 des Spannungssummiertransformators Tr induzierten Spannungen, wie es aus den Fig. 3 und 4 hervorgeht.

Die Reihenschaltung aller netzseitigen Wicklungen 1 des Spannungssummiertransformators Tr bewirkt, dass bei einem Strom i1 durch netzseitige Wicklungen gleichzeitig ein Strom in allen stromrichterseitigen Wicklungen 2 fliessen muss. Wenn alle Wicklungspaare gleich sind (gleiche Anzahl Windungen und gleiche Uebersetzung), muss auch der Strom in allen stromrichterseitigen Wicklungen 2 gleiche Grösse und gleiche Polarität haben.

Zur Erläuterung der Wirkungsweise der Stromrichterschaltung werden zunächst die Schaltzustände Z1 ... Z8 eines Vierquadrantenstellers gemäss Fig. 2 definiert unter Angabe der Richtung des Stromflusses. Der Einfachheit halber werden von links nach rechts nur die Bezugszeichen der nacheinander durchflossenen Bauelemente und Eingangsklemmen bzw. Pole des Vierquadrantenstellers angegeben.

Schaltzustand Z1: $U_Q > 0$, $i_Q > 0$
Stromflussrichtung: 8 - 21a - T1 - 2 - T4 - 21d - 9
Schaltzustand Z2: $U_Q > 0$, $i_Q < 0$
Stromflussrichtung: 9 - 21d - D4 - 2 - D1 - 21a - 8
Schaltzustand Z3: $U_Q < 0$, $i_Q > 0$
Stromflussrichtung: 9 - 21c - D2 - 2 - D3 - 21b - 8
Schaltzustand Z4: $U_Q < 0$, $i_Q < 0$
Stromflussrichtung: 8 - 21b - T3 - 2 - T2 - 21c - 9
Schaltzustand Z5: $U_Q = 0$, $i_Q > 0$
Stromflussrichtung: T1 - 2 - D3 - 21b - 21a - T1
Schaltzustand Z6: $U_Q = 0$, $i_Q > 0$
Stromflussrichtung: T4 - 21d - 21c - D2 - 2 - T4
Schaltzustand Z7: $U_Q = 0$, $i_Q < 0$
Stromflussrichtung: T3 - 2 - D1 - 21a - 21b - T3
Schaltzustand Z8: $U_Q = 0$, $i_Q < 0$
Stromflussrichtung: T2 - 21c - 21d - D4 - 2 - T2

Die Wirkungsweise der Stromrichterschaltung wird nun anhand der Fig. 3 und 4 erläutert, wobei der Einfachheit halber ein Spannungssummiertransformator Tr mit nur fünf Teiltransformatoren Tr1 - Tr5 und zugehörigen fünf Vierquadrantenstellern Q1 - Q5 zugrundegelegt sind. Die Uebersetzung der Wicklungspaare 1 und 2 der Teiltransformatoren Tr1 - Tr5 sei 1:1.

In den Fig. 3a und 4a sind auf der Ordinate Wechselstrom i und Wechselspannung U und auf der Abszisse die Zeit t in willkürlichen Einheiten aufgetragen. Die netzseitige Wechselspannung U1 des Spannungssummiertransformators Tr wird stufenweise gebildet, wobei die mittels der Vierquadrantensteller Q1 - Q5 gebildeten, addierten Spannungsstufen in ihrem zeitlichen Verlauf so gebildet sind, dass sich in der Summe angenähert eine Sinusform ergibt. Der Wechselstrom i1 ist im gewählten Beispiel gegenüber der Wechselspannung U1 um 30° phasenverschoben.

In den Fig. 3b - 3f und 4b - 4f sind auf der Ordinate die Wechselspannung $U_Q$ der Vierquadrantensteller Q1 - Q5 und auf der Abszisse die Zeit t in Einheiten der Fig. 3a und 4a dargestellt.

Bei dem Ausführungsbeispiel gemäss Fig. 3, bei dem Thyristoren T1 und T4 bzw. T3 und T2 in diagonalen Brückenzweigen eines Vierquadrantenstellers Q1 - Q5 für den Zustand $U_Q = 0$ nicht gleichzeitig gezündet werden, ist die Spannungsstufenzahl doppelt so gross wie bei dem Ausführungsbeispiel gemäss Fig. 4, bei dem die Thyristoren in diagonalen Brückenzweigen immer gleichzeitig gezündet werden.

Bei dem Ausführungsbeispiel gemäss Fig. 3 erzeugen im Zeitpunkt t0 die Vierquadrantensteller Q2 - Q5 keine Wechselspannung $U_Q$ (Schaltzustände Z5 oder Z6), während der Vierquadrantensteller Q1 vom Schaltzustand Z5 oder Z6 in den Schaltzustand Z2 wechselt und eine Wechselspannung $U_Q = Ud$ über den Teiltransformator Tr1 auf die netzseitige Wicklung 1 des Spannungssummiertransformators Tr überträgt, entsprechend der ersten Spannungsstufe in Fig. 3a.

Im Zeitpunkt t1 wechselt der Vierquadrantensteller Q2 vom Schaltzustand Z5 oder Z6 durch Sperren der leitenden Thyristoren T1 oder T4 in den Schaltzustand Z2, vgl. Fig. 3c, entsprechend der zweiten Spannungsstufe in Fig. 3a. Im Zeitpunkt t2 wechselt der Wechselstrom i1 sein Vorzeichen von "-" nach "+", so dass die Vierquadrantensteller Q1 und Q2 vom Schaltzustand Z2 in den Schaltzustand Z1 wechseln und die Thyristoren T1 und T4 anstelle der Dioden D1 und D4 die Leitung des Wechselstromes $i_Q$ übernehmen. Gleichzeitig schaltet der Vierquadrantensteller Q3 vgl. Fig. 3d, vom Schaltzustand Z5 oder Z6 in den Schaltzustand Z1, entsprechend der dritten Spannungsstufe in Fig. 3a. Die gleiche Umschaltung erfolgt bei den Vierquadrantenstellern Q4 und Q5 zu den Zeitpunkten t3 und t4, vgl. Fig. 3e und 3f, entsprechend der 4. und 5. Spannungsstufe in Fig. 3a. Im Zeitpunkt t5 wechselt der Vierquadrantensteller Q1 vom Schaltzustand Z1 in den Schaltzustand Z7 oder Z8 mit $U_Q = 0$. Für die Vierquadrantensteller Q2 ... Q5 erfolgt dieser Uebergang zu den Zeiten t6 ... t9.

Für die negative Halbperiode der Wechselspannung U1 gilt Entsprechendes wie für die positive Halbperiode. Zum Zeitpunkt t9 und t10 wechseln die Vierquadrantensteller Q1 bzw. Q2 vom Schaltzustand Z7 oder Z8 in den Schaltzustand Z3 und nach dem Nulldurchgang des Wechselstromes i1 zum Zeitpunkt t11 in den Schaltzustand Z4. Die Vierquadrantensteller Q3 ... Q5 wechseln zu den Zeiten t11 ... t13 vom Schaltzustand Z7 oder Z8 in den Schaltzustand Z4. Zu den Zeiten t14 ... t18 wechseln die Vierquadrantensteller Q1 ... Q5 in den Schaltzustand Z5 oder Z6.

Folgende Schaltzustände sind gleichzeitig oder vorzugsweise abwechselnd benutzt, damit die stromdurchflossenen Halbleiterbauelemente möglichst gleichmässig ausgelastet und somit möglichst wenig erwärmt werden: Z5 mit Z6 und Z7 mit Z8. Bei entsprechender Ueberdimensionierung kann auf eine alternierende Ansteuerung verzichtet werden.

Bei dem Ausführungsbeispiel gemäss Fig. 4 fehlen die Schaltzustände mit $U_Q = 0$. Wie bei den Fig. 3b - 3f zeigen bei den Fig. 4b - 4f linksschraffierte Bereiche Schaltzustände in Vierquadrantenstellern an, in denen nur Dioden leiten. In rechtsschraffierten Bereichen leiten nur Thyristoren den Strom.

Zu den Zeiten t19 - t22 werden die Vierquadrantensteller Q1 - Q4 nacheinander vom Schaltzustand Z4 in den Schaltzustand Z2 geschaltet. Im Zeitpunkt t23 ändert der Wechselstrom i1 sein Vorzeichen von "-" nach "+", und die Vierquadrantensteller Q1 - Q4 wechseln vom diodenleitenden Schaltzustand Z2 in den thyristorleitenden Schaltzustand Z1. Der Vierquadrantensteller Q5 wechselt vom thyristorleitenden Schaltzustand Z4 in den diodenleitenden Schaltzustand Z2. Im Zeitpunkt t24 ändert der Vierquadrantensteller Q5 vom Schaltzustand Z2 in den Schaltzustand Z1. Zu den Zeiten t25 - t28 werden bei den Vierquadrantenstellern Q1 - Q4 nacheinander die Thyristoren abgeschaltet, so dass diese vier Vierquadrantensteller in den Schaltzustand Z3 übergehen. Im Zeitpunkt t29 ändert der Wechselstrom i1 sein Vorzeichen von "+" nach "-", wobei die Vierquadrantensteller Q1 - Q4 in den Schaltzustand Z4 wechseln und der Vierquadrantensteller Q5 in den Schaltzustand Z2. Im Zeitpunkt t30 wechselt auch der Vierequadrantensteller Q5 in den Schaltzustand Z4.

Der Betrieb der Vierquadrantensteller gemäss Fig. 4 hat gegenüber demjenigen nach Fig. 3 den Vorteil, dass jeder Vierquadrantensteller während einer Periode der Wechselspannung U1 nur einmal ein- und ausgeschaltet wird. Dadurch reduzieren sich die Energieverluste im Vierquadrantensteller. Die Thyristorbeschaltung 17, insbesondere der Beschaltungswiderstand 19, kann für eine kleinere Leistung ausgelegt sein. Der Aufwand für die Kühlung der Halbleiterbauelemente ist reduziert. Die Ansteuerung der Thyristoren ist einfacher. Nachteilig ist die geringere Anzahl von Spannungsstufen, die eine schlechtere Angleichung an die gewünschte Sinusform der zu erzeugenden Wechselspannung U1 zur Folge hat. Bei genügender Anzahl von Vierquadrantenstellern und bei grossen Gesamtleistungen fällt dieses Problem nicht stark ins Gewicht. Ein weiterer Nachteil besteht in grösseren Energieverlusten in Eisenteilen der Transformatoren Tr1 ... Tr13, da die Vierquadrantensteller ohne Nullspannungs-Betriebszustand arbeiten. Dadurch muss jeder Teiltransformator praktisch immer bis zur Nenninduktivität belastet werden. Bei niedrigen Frequenzen, wie z.B. 16 2/3 Hz, fallen jedoch Eisenverluste weniger ins Gewicht. Vergleichsweise grössere Energieverluste treten in den Stromleitungen bzw. Stromschienen zwischen den Vierquadrantenstellern Q1 - Q13 und dem Gleichspannungszwischenkreis 10 auf. Im Unterschied dazu fliesst bei der Betriebsart gemäss Fig. 3 in den Nullspannungs-Schaltzuständen Z5 - Z8 kein Strom zum Zwischenkreis.

Unter der vereinfachenden Annahme, dass Wechselstrom i1 und Wechselspannung U1 in den netzseitigen Wicklungen 1 des Spannungssummiertransformators Tr in Phase sind und der 13. Teiltransformator Tr13 als Momentanreserve an der Spannungsbildung unbeteiligt ist, sei die Betriebsweise der Stromrichterschaltung entsprechend Fig. 4 nochmals kurz erläutert. In einem gegebenen Zeitpunkt fliesse der Strom bei 7 von insgesamt 12 Vierquadrantenstellern durch jene Thyristoren, welche den Strom der positiven Halbschwingung führen können, Schaltzustand Z1. Wenn die Thyristoren der übrigen 5 Vierquadrantensteller sperren, wird der Stromfluss von ihren stellerseitigen Teiltransformatorwicklungen 2 über die Sperrdioden in den Plusteil des Gleichspannungszwischenkreises 10 erzwungen. Dazu müssen ihre Transformatorwicklungen 2 die notwendige Spannung aufbringen, welche höher als die Zwischenkreisspannung Ud ist. Bei einer Uebersetzung der Wicklungspaare 1, 2 von 1:1 wird in den netzseitigen Wicklungen 1 der betreffenden fünf Wicklungspaare eine Gegenspannung erzeugt, welche gleich gross ist. Damit entspricht die momentan induzierte Gesamtspannung U1 in den netzseitigen Wicklungen 1 des Spannungssummiertransformators Tr dem doppelten Wert der Zwischenkreisspannung Ud, nämlich $7 \bullet Ud - 5 \bullet Ud = 2 \bullet Ud$.

Wenn nach einer entsprechenden Zeit die Thyristoren eines bis dahin gesperrten Vierquadrantenstellers gezündet werden, wird sein Strom von den Sperrdioden auf die Thyristoren kommutieren. Dabei ändert sich die Strompolarität dieses Vierquadrantenstellers in den Verbindungen zwischen Vierquadrantensteller und Gleichspannungszwischenkreis 10. Die Strompolarität in den Wicklungen des Spannungssummiertransformators Tr bleibt unverändert, und nur die Spannungspolarität des betreffenden Wicklungspaares wird geändert. Damit wird die neue, momentane, induzierte Gesamtspannung U1 in den netzseitigen Wicklungen 1 des Spannungssummiertransformators Tr einen Wert 8 • Ud - 4 • Ud = 4 • Ud von vierfacher Zwischenkreisspannung Ud erreichen. In weiteren entsprechenden Zeitabständen folgen Einschaltungen weiterer Thyristoren jener Vierquadrantensteller, welche bis dahin den Strom über Sperrdioden geleitet haben. Am Ende werden alle 12 Vierquadrantensteller den Strom über Thyristoren leiten. Zu diesem Zeitpunkt entspricht die momentane induzierte Gesamtspannung in den netzseitigen Wicklungen 1 des Spannungssummiertransformators Tr dem 12fachen Wert der Zwischenkreisspannung Ud.

Auf die beschriebene Weise kann eine treppenförmige Spannungskurve von 0 bis zum Amplitudenwert in den netzseitigen Wicklungen 1 des Spannungssummiertransformators Tr gebildet werden. Der Abbau der induzierten Gesamtspannung in den netzseitigen Wicklungen 1 des Spannungssummiertransformators Tr vom Amplitudenwert bis Null erfolgt durch zeitlich verschobene Abschaltungen der Thyristoren jener Vierquadrantensteller, welche in den netzseitigen Wicklungen der zugehörigen Wicklungspaare die Spannungspolarität ändern und damit die Gesamtspannung reduzieren sollen. Die negative Halbschwingung wird entsprechend der positiven gebildet, wobei dann die für die negative Stromhalbschwingung zuständigen Thyristoren und Sperrdioden der Vierquadrantensteller aktiv werden.

Da im reellen Betrieb die Ströme und Spannungen in den netzseitigen Wicklungen 1 des Spannungssummiertransformators Tr meist nicht in Phase sind, wird jeder Stromnulldurchgang immer eine Aenderung der momentanen Kombination der Vierquadrantensteller in bezug auf Stromführung durch Thyristoren bzw. Sperrdioden erforderlich machen.

Eine Aenderung des Netzstromes i1 ist immer mit einer starr gekoppelten Stromänderung in allen Teiltransformatorwicklungspaaren 1, 2 verbunden. Dementsprechend kann der Spannungssummiertransformator Tr mit einer normalen Kurzschlusspannung von z.B. 5 % gebaut werden, wobei die Stromform nicht schlechter wird als bei einem gewöhnlichen Vierquadrantensteller, der mit einem Transformator mit erhöter Kurzschlusspannung von z.B. 30 % gekoppelt ist und in der Arbeitsweise des Unterschwingungsverfahrens arbeitet. Dadurch lassen sich die Transformatorkosten sowie die Kupferverluste reduzieren, was zu einer Verbesserung des Gesamtwirkungsgrades führt.

Jede Ein- oder Ausschaltung der Thyristoren von einem der 12 Vierquadrantensteller Q1 - Q12 bewirkt eine Aenderung des induzierten momentanen Gesamtspannungswertes in den netzseitigen Wicklungen 1 des Spannungssummiertransformators Tr entsprechend 1/6 des Amplitudenwertes. Dieser relativ kleine Spannungssprung muss eine Aenderung des Stromes in allen Wicklungen des Spannungssummiertransformators Tr bewirken. Dementsprechend werden die Streuinduktivitäten aller Wicklungen die Stromänderungen verlangsamen. Dadurch entsteht ein starker Stromglättungseffekt, welcher dazu beiträgt, dass die Stromform und damit auch die Spannungsform an den netzseitigen Ausgangsklemmen 3, 4 des Spannungssummiertransformators Tr weniger Oberschwingungen enthält und sich bei entsprechender Ansteuerung der Vierquadrantensteller der Sinuskurve besser anpassen lässt.

Das hier beschriebene System lässt auch die Möglichkeit zu, neben der Bildung der treppenförmigen Spannung diese auch fein zu regeln. Zu diesem Zweck müsste mindestens einer der Vierquadrantensteller in gewöhnlicher Ausführung für Taktbetrieb, d.h. mit aufwendiger Beschaltung, ausgeführt werden (z.B. die Reservestufe). Eine erhöte Kurzschlusspannung des Teiltransformatorwicklungspaares 1, 2 dieses Vierquadrantenstellers Q13 ist nicht notwendig, da sich auch dieser Vierquadrantensteller nur zum Bruchteil an der Bildung des Gesamtspannungsmomentanwertes und an der Verzerrung des Gesamtstromes beteiligt.

Im Notbetrieb kann die Wechselspannung U1 auch ohne takten eines der Vierquadrantensteller durch Verlängerung der Stromführungsdauer einzelner Stufen geregelt werden. Dies bewirkt allerdings einen höheren Oberschwingungsanteil in der induzierten Spannungsgrundschwingung.

Da die einzelnen Wicklungspaare 1, 2 des Spannungssummiertransformators Tr in der Arbeitsweise eines Stromwandlers arbeiten, muss sichergestellt werden, dass der Stromkreis keines der stellerseitigen Wicklungen 2 in Störungsfällen offen bleiben kann, z.B. wenn Thyristoren oder Sperrdioden eines Stellers defekt werden und dieser Stromkreis durch Sicherungen auf der Zwischenkreisund Transformatorseite vom System getrennt wird. Zu diesem Zweck wird zu jeder stellerseitigen Transformatorwicklung 2 ein Thyristorkurzschliesser 5 für beide Stromrichtungen installiert. Die Thyristoren des Kurzschliessers 5 müssen auf jeden Fall automatische, selbstzündende Notzündkreise haben, welche den Kurzschliesser bei einer Ueberschreitung einer vorgebbaren Höchstspannung automastisch leitend machen. Diese Höchstspannung muss etwas höher als die maximale Betriebsspannung des Gleichspannungszwischenkreises 10 liegen. Die Realisierung der Notzündkreise wird meistens, wie allgemein bekannt, mit Hilfe von Kippdioden gelöst, welche beim Erreichen einer bestimmten Spannung leitend werden und den Thyristor über den normalen Zündkreis zünden.

Neben den Notzündkreisen können die Kurzschliesser-Thyristoren mit zusätzlichen Zündkreisen ausgerüstet werden, welche jederzeit eine gewünschte Zündung erlauben. Damit können die Wechselstromschalter 5 alternativ zu Regelzwekken verwendet werden, und zwar bei der Nullspannungsbildung $U_Q = 0$ eines Vierquadrantenstellers, entsprechend den Schaltzuständen Z5 - Z8. Dabei wird der Wechselstromschalter 5 während der entsprechenden Zeitintervalle eingeschaltet. Gleichzeitig entfallen die sonst für die Schaltzustände Z5 - Z8 erforderlichen Zündsignale für die Vierquadrantensteller.

Da beim Wechselstromschalter 5 jeweils nur ein Halbleiterbauelement stromführend ist, im Vergleich zu zwei stromführenden Halbleiterbauelementen in den Schaltzuständen Z5 - Z8, reduzieren sich die Energieverluste während dieser Zeitintervalle.

Im allgemeinen wird die Höhe der Wechselspannung eines Vierquadrantenstellers entweder durch Regelung der Zwischenkreisgleichspannung Ud, z.B. durch Anschnittsteuerung des netzgeführten 50-Hz-Speisestromrichters 15 oder durch einen einzigen der Vierquadrantensteller, welcher im Taktbetrieb mit höherer Frequenz arbeitet, geregelt. Die Ansteuerung der übrigen Vierquadrantensteller wird von einer anderen Regelung bedient, welche für Spannungsform und Phasenlage am netzseitigen Ausgang des Spannungssummiertransformators Tr verantwortlich ist.

Gewerbliche Verwertbarkeit

Die erfindungsgemässe Stromrichterschaltung ist zur Energieübertragung in beiden Richtungen, d.h. vom Wechselspannungsnetz N1 ins Wechselspannungsnetz N2 und umgekehrt geeignet, vorzugsweise im Leistungsbereich von 5 MW - 20 MW. Beide Netze können selbstverständlich mehrphasig sein. In diesem Fall ist für jede Phase des Wechselstromes ein Spannungssummiertransformator Tr mit Teiltransformatoren Tr1 ... Tr13 und zugehörigen Stromrichtern Q1 ... Q13 und Wechselstromschaltern 5 vorzusehen. Es können auch mehr oder weniger als 13 Teiltransformatoren je Spannungssummiertransformator Tr verwendet werden.

Die Stromrichterschaltung kann auch für Frequenzumformer dreiphasiger Netze verwendet werden, z.B. 50 Hz/60 Hz oder 60 Hz/25 Hz usw.

Statt gewöhnlicher Thyristoren im Wechselstromschalter 5 können auch abschaltbare GTO-Thyristoren oder, für kleinere Ströme, Transistoren verwendet werden. Statt GTO-Thyristoren im Vierquadrantensteller können selbstverständlich gewöhnliche Thyristoren mit Löschkreisen oder Transistoren verwendet werden. Bei Bedarf können mehrere Thyristoren in Reihe und/oder parallelgeschaltet sein.

Mit der Stromrichterschaltung ist, unabhängig von der Energieübertragungsrichtung, eine Leistungsübertragung im kapazitiven und induktiven Bereich möglich, d.h., sie ist auch als Blindleistungskompensator einsetzbar. Die Stromrichterschaltung kann parallel zu anderen Spannungsquellen im Netz betrieben werden. Die Arbeit der Stromrichterschaltung von praktisch Null- bis Vollast ist ohne drastische Wirkungsgradreduktion und ohne wesentliche Erhöhung des Oberschwingungsanteils möglich.

**Patentansprüche**

1. Verfahren zum Steuern einer Stromrichterschaltung,

a) welche mit einem Spannungssummiertransformator (Tr), der mehrere magnetisch entkoppelte Teiltransformatoren (Tr1 - Tr13) aufweist, in Wirkverbindung steht, wobei jeder Teiltransformator mindestens eine netzseitige Wicklung (1) und mindestens eine stromrichterseitige Wicklung (2) besitzt,

b) wobei die netzseitigen Wicklungen (1) der Teiltransformatoren in Reihe geschaltet sind und

c) die stromrichterseitige Wicklung (2) jedes Teiltransformators (Tr1 - Tr13) mit einem Stromrichter (Q1 - Q13) in Wirkverbindung steht,

d) wobei zur Erzeugung einer wenigstens annähernd sinusförmigen Wechselspannung (U1) mit einer vorgebbaren Frequenz die Amplitude der Grundschwingung dieser Wechselspannung in Spannungsstufen durch stufenweise Addition und/oder Subtraktion von Teilspannungen bzw. Gleichspannungen gleicher Grösse (Ud) gebildet wird,

e) wobei Beginn und Ende jeder Spannungsstufe zeitlich so gestaffelt sind, dass die durch die Spannangsstufen erzeugte Treppenform der Sinusform angepasst ist,

f) wobei jede Teilspannung (Ud) durch eine besondere Teilspannungsquelle (Tr1, Q1; Tr2, Q2; ... Tr13, Q13) erzeugt wird und

g) die Teilspannungsquellen in derselben Reihenfolge abgeschaltet werden, wie sie zur Bildung der Treppenform eingeschaltet wurden,

dadurch gekennzeichnet,

h) dass ein zum Wechselspannungsanschluss (6, 7) des Stromrichters (Q1 - Q13) parallelgeschaltetes elektrisches Ventil (5) jeweils nach dem Ausschalten eines Thyristors (T1 - T4) eines Stromrichters (Q1 - Q13) leitend gemacht wird.

2. Verfahren nach Anspruch 1, dadurch gekennzeichnet, dass einer der Stromrichter (Q13) zur Feinregelung der treppenförmigen Spannung mit höherer Frequenz als die übrigen Stromrichter (Q1 - Q12) getaktet wird.

3. Verfahren nach Anspruch 1 oder 2, dadurch gekennzeichnet, dass alternative Stromzweige bzw. Schaltzustände (Z5, Z6; Z7, Z8) eines Stromrichters (Q1 - Q13) abwechselnd angesteuert werden, um die stromdurchflossenen Halbleiterbauelemente möglichst gleichmässig thermisch zu belasten.

4. Stromrichterschaltung,
a) welche mit einem Spannungssummiertransformator (Tr), der mehrere magnetisch entkoppelte Teiltransformatoren (Tr1 - Tr13) aufweist, in Wirkverbindung steht, wobei jeder Teiltransformator mindestens eine netzseitige Wicklung (1) und mindestens eine stromrichterseitige Wicklung (2) besitzt,
b) wobei die netzseitigen Wicklungen (1) der Teiltransformatoren in Reihe geschaltet sind und
c) die stromrichterseitige Wicklung (2) jedes Teiltransformators (Tr1 - Tr13) mit einem Stromrichter (Q1 - Q13) in Wirkverbindung steht,
d) wobei jeder Stromrichter (Q1 - Q13) eine einphasige Brückenschaltung mit je einem abschaltbaren Thyristor (T1 - T4) je Brückenzweig aufweist,
dadurch gekennzeichnet,
e) dass zu jedem Thyristor dieser Brückenschaltung eine Diode (D1 - D4) antiparallelgeschaltet ist und
f) dass zum Wechselspannungsanschluss jedes Stromrichters (Q1 - Q13) mindestens ein Wechselstromschalter (5) parallelgeschaltet ist.

5. Stromrichterschaltung nach Anspruch 4, dadurch gekennzeichnet, dass der Wechselstromschalter ein Thyristor-Wechselstromschalter (5) ist.

6. Verwendung der Stromrichterschaltung nach Anspruch 4 oder 5 für einen Frequenzumformer.

7. Verwendung der Stromrichterschaltung nach Anspruch 4 oder 5 für einen Blindleistungskompensator.

**Claims**

1. Process for controlling a static converter circuit
a) which is effectively connected to a voltage summing transformer (Tr) which has several magnetically decoupled part transformers (Tr1 - Tr13), each part transformer having at least one power-system-side winding (1) and at least one static-converter-side winding (2),
b) the power-system-side windings (1) of the part transformers being connected in series and
c) the static-converter-side winding (2) of each part transformer (Tr1 - Tr13) being effectively connected to a static converter (Q1 - Q13)
d) for generating an at least approximately sinusoidal alternating voltage (U1) with a predeterminable frequency, the amplitude of the fundamental oscillation of this alternating voltage being formed in voltage steps by step-by-step addition and/or subtraction of part-voltages and/or direct-voltages of equal magnitude (Ud),
e) the beginning and end of each voltage step being staggered in time in such a manner that the stairstep shape generated by the voltage steps is matched to the sinusoidal shape,
f) each part voltage (Ud) being generated by a separate part voltage source (Tr1, Q1; Tr2, Q2; ... Tr13, Q13) and
g) the part-voltage sources being turned off in the same order in which they were turned on for forming the stairstep shape, characterised
h) in that an electric valve (5) which is connected in parallel with the alternating-voltage connection (6, 7) of the static converter (Q1-Q13) is made conductive in each case after a thyristor (T1 - T4) of a static converter (Q1 - Q13) has been turned off.

2. A process according to Claim 1, characterised in that one of the static converters (Q13) is pulsed at a higher frequency than the other static converters (Q1 - Q12) for finely controlling the stairstep-shaped voltage.

3. A process according to Claim 1 or 2, characterised in that alternative current branches and/or switching states (Z5, Z6; Z7, Z8) of a static converter (Q1 - Q13) are alternately triggered, so as to thermally load the semi-conductor components, through which current flows, as evenly as possible.

4. Static converter circuit
    a) which is effectively connected to a voltage summing transformer (Tr) which has several magnetically decoupled part transformers (Tr1 - Tr13), each part transformer having at least one power-system-side winding (1) and at least one static-converter-side winding (2),
    b) the power-system-side windings (1) of the part transformers being connected in series and
    c) the static-converter-side winding (2) of each part transformer (Tr1 - Tr13) being effectively connected to a static converter (Q1 - Q13)
    d) each static converter circuit (Q1 - Q13) having a single-phase bridge circuit with one gate-turn-off thyristor (T1 - T4) each per bridge branch,
    characterised
    e) in that a diode (D1 - D4) is connected in anti-parallel with each thyristor of this bridge circuit and
    f) in that at least one alternating-current circuit breaker (5) is connected in parallel with the alternating voltage connection of each static converter (Q1 - Q13).

5. Static converter circuit according to Claim 4, characterised in that the alternating-current circuit breaker is a thyristor-type alternating-current circuit breaker (5).

6. Use of the static converter circuit according to Claim 4 or 5 for a frequency converter.

7. Use of the static converter circuit according to Claim 4 or 5 for a reactive-power compensator.

**Revendications**

1. Procédé pour commander un montage convertisseur,
    a) qui est en liaison active avec un transformateur sommateur de tension (Tr) qui comporte plusieurs transformateurs partiels découplés magnétiquement (Tr1 - Tr13), chaque transformateur partiel comprenant au moins un enroulement (1) du côté réseau et au moins un enroulement (2) du côté convertisseur,
    b) les enroulements (1) du côté réseau des transformateurs partiels étant connectés en série, et
    c) l'enroulement (2) du côté convertisseur de chaque transformateur partiel (Tr1 - Tr13) étant en liaison active avec un convertisseur (Q1 - Q13),
    d) dans lequel, pour la production d'une tension alternative au moins approximativement sinusoïdale (U1) d'une fréquence prédéfinie, l'amplitude de la composante fondamentale de cette tension alternative est formée en échelons de tension par addition et/ou soustraction échelonnée de tensions partielles ou de tensions continues de grandeur égale (Ud),
    e) dans lequel le début et la fin de chaque échelon de tension sont échelonnés dans le temps d'une manière telle que la forme en escalier produite par les échelons de tension soit adaptée à la forme sinusoïdale,
    f) dans lequel chaque tension partielle (Ud) est produite par une source de tension partielle particulière (Tr1, Q1; Tr2, Q2; ... Tr13, Q13), et
    g) les sources de tensions partielles sont désactivées dans le même ordre que celui de leur activation pour la réalisation de la forme en escalier,
    caractérisé en ce
    h) qu'une soupape électrique (5) connectée en parallèle à la borne de tension alternative (6, 7) du convertisseur (Q1 - Q13) est rendue conductrice chaque fois après la désactivation d'un thyristor (T1 - T4) d'un convertisseur (Q1 - Q13).

2. Procédé suivant la revendication 1, caractérisé en ce qu'un des convertisseurs (Q13) est rythmé pour le réglage fin de la tension en escalier à une fréquence plus élevée que les autres convertisseurs (Q1 - Q12).

3. Procédé suivant la revendication 1 ou 2, caractérisé en ce que des branches d'enroulements ou états de commutation alternatifs (Z5, Z6; Z7, Z8) d'un convertisseur (Q1 - Q13) sont activés en alternance pour soumettre les éléments semi-conducteurs traversés par le courant à des charges thermiques aussi uniformes que possible.

4. Montage convertisseur,
    a) qui est en liaison active avec un transformateur sommateur de tension (Tr) qui comporte plusieurs transformateurs partiels découplés magnétiquement (Tr1 - Tr13), chaque transformateur partiel possédant au moins un enroulement (1) du côté réseau et au moins un enroulement (2) du côté convertisseur,
    b) les enroulements (1) du côté réseau des transformateurs partiels étant connectés en série, et
    c) l'enroulement (2) du côté convertisseur de chaque transformateur partiel (Tr1 - Tr13) étant en liaison active avec un convertisseur (Q1 - Q13),

d) chaque convertisseur (Q1 - Q13) comportant un montage en pont monophasé comprenant un thyristor déclenchable (T1 - T4) dans chaque branche de pont,

caractérisé en ce

e) qu'une diode (D1 - D4) est connectée en antiparallèle à chaque thyristor de ce montage en pont, et

f) qu'au moins un disjoncteur à courant alternatif (5) est connecté en parallèle à la borne de tension alternative de chaque convertisseur (Q1 - Q13).

5. Montage convertisseur suivant la revendication 4, caractérisé en ce que le disjoncteur à courant alternatif est un disjoncteur à courant alternatif à thyristor (5).

6. Utilisation du montage convertisseur suivant la revendication 4 ou 5 pour un convertisseur de fréquence.

7. Utilisation du montage convertisseur suivant la revendication 4 ou 5 pour un compensateur de cosinus Φ.

FIG. 1

FIG. 2

11

FIG. 3

FIG. 4